# EUROPÄISCHE PATENTSCHRIFT

(11) **EP 1 320 728 B1**
(45) Veröffentlichungstag und Bekanntmachung des Hinweises auf die Patenterteilung: **10.01.2007**
(21) Anmeldenummer: 01956549.8
(22) Anmeldetag: 20.07.2001
(51) Int. Cl.: G01G 19/414

(54) **KRAFTAUFNEHMER FÜR EINEN FAHRZEUGSITZ**
FORCE TRANSDUCER FOR A VEHICLE SEAT
TRANSDUCTEUR DE FORCE POUR SIEGE DE VEHICULE

(30) Priorität: 21.07.2000 DE 10035483
(43) Veröffentlichungstag der Anmeldung: 25.06.2003
(73) Patentinhaber: Sartorius Hamburg GmbH, 22145 Hamburg (DE); SARTORIUS AG, 37075 Göttingen (DE)
(72) Erfinder: GOLLA, Lothar, 22926 Ahrensburg (DE)
(74) Vertreter: Schüll, Gottfried Hubert
(86) Internationale Anmeldenummer: PCT/EP2001/008437
(87) Internationale Veröffentlichungsnummer: WO 2002/008705

(56) Entgegenhaltungen:
- DE-A- 19 925 877
- GB-A- 2 150 307
- GB-A- 2 333 070
- US-A- 4 412 456

## Beschreibung

Die Erfindung betrifft einen Kraftaufnehmer zur Aufnahme der in eine Halterung eines Fahrzeugsitzes eingeleiteten Gewichtskraft mit einem mit dem Fahrzeugsitz verbundenen Krafteinleitungselement, einem mit der Halterung verbundenen Kraftabgabeelement und einem zwischen Krafteinleitungselement und Kraftabgabeelement vorgesehenen Dehnungskörper.

Derartige Kraftaufnehmer werden dazu verwendet, die Sitzbelegung eines Fahrzeugsitzes festzustellen. Dies ist erwünscht, um beispielsweise die Auslösung eines Airbags bei einem nicht belegten Sitz zu vermeiden. Ferner werden Kraftaufnehmer zunehmend dazu verwendet, Rückschlüsse auf das Gewicht und damit auf die Statur der den Sitz belegenden Person zu ziehen. Diese Informationen werden bei Airbags eingesetzt, die in ihrem Füllvolumen variabel sind und unter Zuhilfenahme von Informationen über die zu schützende, auf dem Fahrzeugsitz sitzende Person der Körperstatur dieser Person angepaßt werden können, um die Person im Schadensfall optimal abfangen zu können. Schließlich können solche Kraftaufnehmer auch dazu verwendet werden, das Auslösen eines Airbags zu unterbinden, falls festgestellt wird, daß sich ein Kindersitz auf dem Beifahrersitz befindet. Dies ist insbesondere deshalb wünschenswert, da es sich in der Vergangenheit herausgestellt hat, daß Kleinkinder in Kindersitzen durch auslösende Airbags gravierende Verletzungen erlitten haben.

Ein Kraftaufnehmer für einen Fahrzeugsitz ist beispielsweise aus der DE 199 25 877 A1 bekannt. Der hierin beschriebene Kraftaufnehmer besteht aus einem mit dem Fahrzeugsitz verbundenen, horizontal angeordneten Krafteinleitungselement, welches die eingeleitete Kraft auf einen horizontal angeordneten, plattenförmigen Dehnungskörper vertikal an beiden Enden des Dehnungskörpers weiterleitet. An dem Kraftaufnehmer ist ferner ein Kraftabgabeelement vorgesehen, das zentral mit dem Dehnungskörper verbunden ist und die von dem Dehnungskörper abgegebene Kraft schließlich an die Halterung des Fahrzeugsitzes abgibt. Auf der horizontal angeordneten Oberseite des Dehnungskörpers sind Dehnungsmeßstreifen angeordnet, die eine durch die Krafteinleitung verursachte vertikale Biegung des Dehnungskörpers feststellen können.

Nachteilig an diesem Kraftaufnehmer ist, daß durch die Anordnung des Krafteinleitungselementes im Verhältnis zum Dehnungskörper auch andere, unabhängig von der Gewichtskraft in das Krafteinleitungselement eingeleiteten Kräfte, beispielsweise Querkräfte, an den Dehnungskörper weitergegeben und von den Dehnungsmeßstreifen aufgenommen werden. Der Dehnungskörper wird durch die zusätzlichen Kräfte ergänzend zu dem Einfluß der Gewichtskraft weiter belastet wodurch über die Dehnungsmeßstreifen diese Belastungen aufgenommen werden. So kommt es bei diesem Kraftaufnehmer zu Fehlmessungen, die durch unsymmetrische Belegungen des Sitzes, Beschleunigungs- und Abbremsverhalten des Fahrzeuges und andere, die Halterung des Fahrzeugsitzes in anderer als in der Gewichtskraftrichtung belastender Weise beanspruchen. Ferner hat es sich gezeigt, daß durch den Aufbau dieses Kraftaufnehmers die Steifigkeit der Verbindung des Fahrzeugsitzes mit der Halterung derart beeinflußt wird, daß der Fahrzeugsitz für den Passagier scheinbar nur lose oder schwammig in der Halterung geführt wird.

Damit wird dem Passagier das Gefühl vermittelt, Bewegungen des Fahrzeuges nicht direkt und teilweise verfälscht zu spüren. Dies wird von Passagieren jedoch als unangenehm empfunden.

Der vorliegenden Erfindung liegt vor diesem Hintergrund die Aufgabe zugrunde, einen Kraftaufnehmer für einen Fahrzeugsitz der eingangs näher beschriebenen Art zu schaffen, der eine genaue, von anderen Krafteinflüssen unabhängige Ermittlung der in eine Halterung eines Fahrzeugsitzes eingeleiteten Gewichtskraft ermöglicht. Zusätzlich ist es wünschenswert, daß dieser Kraftaufnehmer kompakt und einfach aufgebaut ist.

Die genannte Aufgabe wird durch einen Kraftaufnehmer der eingangs genannten Art dadurch gelöst, daß das Krafteinleitungselement oder das Kraftabgabeelement den Dehnungskörper in einer Ebene parallel zur Gewichtskraft umgibt und daß an dem Dehnungskörper mindestens ein eine Scherkraft parallel zur Gewichtskraft aufnehmender Dehnungsmeßstreifen angeordnet ist.

Indem das Krafteinleitungselement, bzw. das Kraftabgabeelement den Dehnungskörper in einer Ebene parallel zur Gewichtskraft umgibt, bietet es die Möglichkeit, den Dehnungskörper in ihm derart zu fixieren, daß der Punkt der Krafteinleitung in den Dehnungskörper und der Punkt der Kraftabgabe von dem Dehnungskörper im wesentlichen nur parallel zueinander in Richtung der eingeleiteten Kraft bewegt werden können. Dies führt in Kombination mit der Ausrichtung des eine Scherkraft parallel zur Gewichtskraft aufnehmenden Dehnungsmeßstreifens dazu, daß die Belastung des Fahrzeugsitzes gut aufgenommen werden kann. So reicht bereits eine geringe Scherung des Dehnungskörper aus, um eine zuverlässige Messung der Belastung des Dehnungskörpers in Richtung der Gewichtskraft durchzuführen. Da nur minimale Scherungen des Dehnungskörpers für die Ermittlung eines zuverlässigen Meßergebnisses notwendig sind, kann dieser entsprechend steif ausgelegt werden, so daß der gesamte Kraftaufnehmer und damit die Führung des Fahrzeugsitzes in der Halterung steif ausgestaltet werden kann und dadurch dem Passagier die gewünschte direkte Übermittlung von Änderungen der Fahrzeugbewegung bietet.

Die Anordnung des Krafteinleitungselements, bzw. des Kraftabgabeelements in eine den Dehnungskörper umgebenden Position bietet zudem den Vorteil, daß der Kraftaufnehmer kurz bauend ausgestaltet werden kann. So kann das Krafteinleitungselement, bzw. das Kraftabgabeelement den Dehnungskörper nach Art eines Gehäuses umgeben und an einem Ende mit dem Dehnungskörper verbunden sein. Die Kraft wird dann an diesem Ende in den Dehnungskörper ein-, bzw. aus dem Dehnungskörper abgeleitet.

Ist ein derartiges Gehäuse so ausgestaltet, daß es den Dehnungskörper an wenigstens einer Stelle unter Bildung eines umlaufenden, dünnen Spalts umgibt, so wird durch diesen Aufbau gleichzeitig eine Überlastsicherung des Kraftaufnehmers realisiert. Wird der Kraftaufnehmer derart stark belastet, daß das Gehäuse relativ zu dem nicht mit ihm verbundenen Ende des Dehnungskörpers soweit bewegt wird, daß das Gehäuse teilweise auf dem Dehnungskörper aufliegt, so wird die Kraft zwischen Gehäuse und Dehnungskörper an dieser Stelle direkt in den Dehnungskörper ein- bzw. aus diesem abgeleitet. Eine weitere Dehnung des Dehnungskörpers tritt dann nicht auf. Das Ausmaß des dünnen Spalts ist ein Maß dafür, wann dieser Überlastungszustand zum Tragen kommt, d.h. ab welcher Belastung der Dehnungskörper nicht mehr weiter gedehnt wird.

Dadurch, daß der umlaufende, dünne Spalt durch eine Membran verschlossen ist, ist eine Abdichtung des Kraftaufnehmers gegenüber Schmutzpartikeln, die die Genauigkeit des Kraftaufnehmers beeinträchtigen könnten, gewährleistet.

Die Aufnahme einer Scherkraft parallel zur Gewichtskraft birgt den Vorteil, daß senkrecht zur Gewichtskraft wirkende, ggf. gleichzeitig in den Dehnungskörper eingeleitete Kräfte nicht aufgenommen werden. Auf diese Weise wird sichergestellt, daß durch den erfindungsgemäßen Kraftaufnehmer nur die in eine Halterung des Fahrzeugsitzes eingeleitete Gewichtskraft aufgenommen wird, unabhängig von möglichen anderen Belastungen, die durch Bewegungsänderungen oder Beschleunigungs- oder Bremsbewegungen des Fahrzeugs verursacht werden.

Diese querkraftfreie Aufnahme der in die Halterung des Fahrzeugs eingeleiteten Gewichtskraft durch Aufnahme der Scherkraft parallel zur Gewichtskraft wird in besonders vorteilhafter Weise dadurch erreicht, daß zwei Dehnungsmeßstreifen auf einer parallel zur Wirkrichtung der Gewichtskraft verlaufenden Oberfläche des Dehnungskörpers jeweils entgegengesetzt im gleichen Winkel zur Längsachse des Dehnungskörpers angeordnet sind. Bei einer derartigen Anordnung der Dehnungsmeßstreifen werden die durch in Querrichtung zur Gewichtskraft verlaufenden Kräfte verursachten Deformationen des Dehnungskörpers von beiden Dehnungsmeßstreifen derart aufgenommen, daß sie bei der anschließenden Auswertung der Meßsignale durch Differenzbildung einfach herausgerechnet werden können.

Alternativ ist es möglich, auf zwei parallel zur Wirkrichtung der Gewichtskraft verlaufenden, an gegenüberliegenden Seiten des Dehnungskörpers angeordneten Oberflächen des Dehnungskörpers jeweils zwei entgegengesetzt im gleichen Winkel zur Längsachse des Dehnungskörpers angeordnete Dehnungsmeßstreifen vorzusehen. Diese insgesamt vier Dehnungsmeßstreifen können in vorteilhafter Weise zu einer Wheatstoneschen Brückenschaltung verbunden werden, um ein optimales Meßsignal zu erhalten. Bei einfachen Anforderungen an die Qualität des Meßsignals können bei einer solchen Brückenschaltung auch drei der vier Dehnungsmeßstreifen durch Festwiderstände ersetzt werden.

Um ein besonders großes Meßsignal zu erhalten, ist es zweckmäßig, daß der Dehnungskörper an der Stelle, an der der Dehnungsmeßstreifen angeordnet ist, einen geringen Querschnitt aufweist.

Eine Verringerung des Querschnitts zur Erzielung einer höheren Empfindlichkeit, d.h. eines größeren Signals, läßt sich besonders einfach dadurch erzielen, daß der Dehnungskörper eine erste Ausnehmung im Bereich der Dehnungsmeßstreifen aufweist und die Achse der ersten Ausnehmung im wesentlichen parallel zur Wirkrichtung der Gewichtskraft verläuft. Durch die Anordnung einer solchen Ausnehmung im Bereich der Dehnungsmeßstreifen wird eine höhere Verformung des Dehnungskörpers in diesem Bereich bewirkt, die die gewünschte höhere Empfindlichkeit zur Folge hat.

Um die zum Anschluß der Dehnungsmeßstreifen benötigten elektrischen Leitungen in das Innere des Kraftaufnehmers zu führen, wird der erfindungsgemäße Kraftaufnehmer dadurch vorteilhaft ausgestaltet, daß der Dehnungskörper eine zweite Ausnehmung aufweist, die Achse der zweiten Ausnehmung im wesentlichen senkrecht zur Achse der ersten Ausnehmung in Längsrichtung des Dehnungskörpers verläuft und die zweite Ausnehmung innerhalb des Dehnungskörpers die erste Ausnehmung durchdringt.

Hierdurch wird die Verlegung der elektrischen Leitungen durch den Dehnungskörper bis zu den Dehnungsmeßstreifen ermöglicht.

Weist der Querschnitt des Dehnungskörpers zumindest teilweise einen eckigen Querschnitt auf, so ist gewährleistet, daß der an der Oberfläche des Dehnungskörpers angebrachte Dehnungsmeßstreifen an einer ebenen Fläche angebracht werden kann.

Schließlich läßt sich die Anbringung der Dehnungsmeßstreifen an den Dehnungskörper dadurch weiter vereinfachen, daß der Dehnungskörper zur Anbringung der Dehnungsmeßstreifen eine über die sonstigen Konturen hervorstehende, ebene Fläche aufweist. Eine derartige Ausgestaltung ermöglicht das einfache Anbringen der Dehnungsmeßstreifen in Dünnschichttechnik.

Es gibt nun eine Vielzahl von Möglichkeiten den erfindungsgemäßen Kraftaufnehmer auszugestalten und weiterzubilden. Hierzu wird beispielsweise verwiesen einerseits auf die dem Patentanspruch 1 nachgeordneten Patentansprüche andererseits auf die Beschreibung eines Ausführungsbeispiels in Verbindung mit der Zeichnung. In der Zeichnung zeigen
- Fig. 1: einen Fahrzeugsitzes in einer Draufsicht,
- Fig. 2: ein erstes Ausführungsbeispiel eines erfindungsgemäßen Kraftaufnehmers in einer teilweise geschnittenen perspektivischen Ansicht,
- Fig. 3: ein zweites Ausführungsbeispiel eines erfindungsgemäßen Kraftaufnehmers in einer teilweise geschnittenen perspektivischen Ansicht,
- Fig. 4: ein drittes Ausführungsbeispiel eines erfindungsgemäßen Kraftaufnehmers in einer teilweise geschnittenen perspektivischen Ansicht,
- Fig. 5 a), b): ein viertes Ausführungsbeispiel eines erfindungsgemäßen Kraftaufnehmers im Schnitt und in einer perspektivischen Ansicht,
- Fig. 6 a), b): ein fünftes Ausführungsbeispiel eines erfindungsgemäßen Kraftaufnehmers in einer perspektivischen Ansicht und einer teilweise geschnittenen perspektivischen Ansicht sowie,
- Fig. 7: ein sechstes Ausführungsbeispiel eines erfindungsgemäßen Kraftaufnehmers in einer perspektivischen Ansicht.

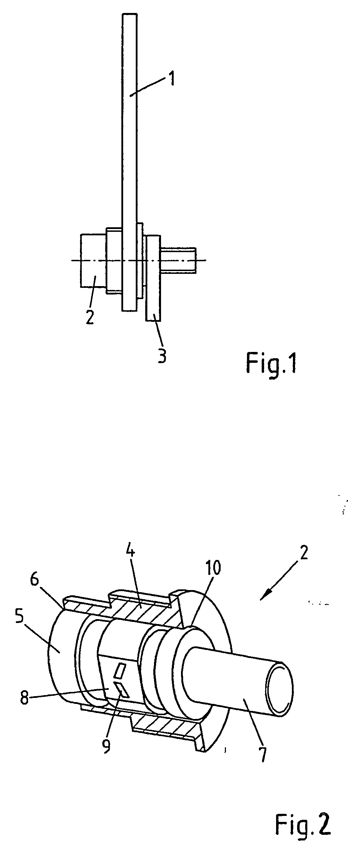

In Fig. 1 sind zwei der insgesamt vier Halterungsstege 1 eines Fahrzeugsitzes F dargestellt. Die Halterungsstege 1 sind an ihrem oberen Ende mit dem Rahmen des Fahrzeugsitzes F und an ihrem unteren Ende mit jeweils einem Kraftaufnehmer 2 verbunden. Die Kraftaufnehmer 2 sind des weiteren mit dem Halterungsgestell 3 verbunden, das in die Führungsschiene des Fahrzeugsitzes F eingreift.

Fig. 2 zeigt den Aufbau eines ersten Ausführungsbeispiel eines erfindungsgemäßen Kraftaufnehmers 2. Dieser weist ein als zylindrisches Gehäuse ausgebildetes Krafteinleitungselement 4 auf, das über ein Außengewinde mit dem nicht dargestellten Halterungssteg 1 verbunden ist. Ferner weist der Kraftaufnehmer 2 einen zentrisch in dem Krafteinleitungselement 4 angeordneten Dehnungskörper 5 auf, der an seinem einen Ende 6 mit dem Krafteinleitungselement 4 verschweißt ist. An dem dem Ende 6 gegenüberliegenden Ende ist der Dehnungskörper 5 mit einem als, evtl. mit dem Dehnungskörper einstückig ausgeführten, Schraubbolzen ausgebildeten Kraftabgabeelement 7 verbunden, das wiederum mit dem Halterungsgestell 3 fest verbindbar ist. Der zylindrische Dehnungskörper 5 weist eine parallel zur Wirkrichtung der Gewichtskraft verlaufende Oberfläche 8 auf, auf der jeweils entgegengesetzt in einem Winkel von 45° zur Längsachse des Dehnungskörpers 5 angeordnete Dehnungsmeßstreifen 9 aufgeklebt oder in Dünnschichttechnik aufgebracht sind.

Eine ähnliche, mit zwei Dehnungsmeßstreifen versehene Fläche kann auf der relativ zur Längsachse des Dehnungskörpers 5 gegenüberliegenden Seite des Dehnungskörpers 5 angebracht sein. Die bei einer derartigen Ausführungsform vorhandenen insgesamt vier Dehnungsmeßstreifen können zu einer Wheatstoneschen Brückenschaltung verbunden sein, um dadurch die Qualität des Meßsignals zu erhöhen.

Zwischen einer Verdickung des Dehnungskörpers 5 und dem Krafteinleitungselement 4 ist ein an dem dem Ende 6 gegenüberliegenden Ende angeordneter dünner Spalt 10 vorgesehen.

Durch die Belastung des nicht dargestellten Fahrzeugsitzes wird in die Halterungsstege 1 eine Gewichtskraft eingeleitet, die über die Halterungsstege 1 an das Krafteinleitungselement 4 weitergeleitet wird. Über den festen Verbund mit dem Dehnungskörper 5 wird diese Kraft am Ende 6 des Krafteinleitungselementes 4 derart in den Dehnungskörper 5 eingeleitet, daß dieser relativ zu seinem über das Kraftableitungselement 7 fest in dem Halterungsgestell 3 gehaltenen Ende in Wirkrichtung der Gewichtskraft parallel zu dieser verschoben wird. Dadurch entsteht in dem Dehnungskörper 5 eine ausgeprägte Scherung, die über die Dehnungsmeßstreifen 9 aufgenommen wird.

Orthogonal zur Gewichtskraft wirkende weitere Kräfte werden zwar ebenfalls in die Halterungsstege 1 und damit in die Krafteinleitungselemente 4 eingeleitet. Diese führen jedoch zu einer Scherung des Dehnungskörpers 5 in eine Richtung senkrecht zu der Ebene der Dehnungsmeßstreifen 9, die durch diese derart aufgenommen wird, daß sie bei Differenzbildung der Meßsignale der einzelnen Dehnungsmeßstreifen 9 aus dem Meßergebnis herausgerechnet werden kann.

Durch den Spalt 10 wird ein wirksamer Überlastschutz des Kraftaufnehmers 2 gewährleistet. Wird das Ende 6 des Dehnungskörpers derart belastet, daß die Bewegung des starren Krafteinleitungselements 4 zum belasteten Dehnungskörper 5 derart ist, daß das Krafteinleitungselement 4 an seinem dem Ende 6 gegenüberliegenden Ende auf dem Dehnungskörper 5 aufsitzt, so wird eine weitere Scherbelastung des Dehnungskörpers 5 ausgeschlossen, da die Kraft von dem Krafteinleitungselement 4 direkt über das verdeckte Ende des Dehnungskörpers 5 in das Kraftabgabeelement 7 eingeleitet wird.

Für die Wirkungsweise des Kraftaufnehmers 2 ist es unerheblich, ob, wie oben beschrieben, das Krafteinleitungselement das Gehäuse des Dehnungskörpers bildet und das Kraftabgabeelement den mit dem Halterungsgestell 3 verbundenen Bolzen bildet, oder ob die Kraft über den Stift eingeleitet wird und über das Gehäuse an das Halterungsgestell 3 abgegeben wird.

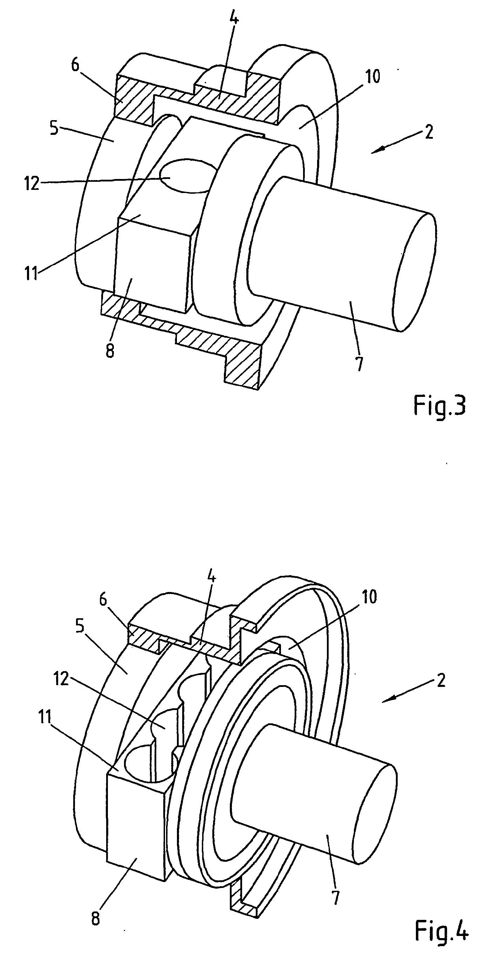

Bei den in Fig. 3 dargestellten zweiten Ausführungsbeispiel weist der als Meßelement 11 ausgebildete Bereich des Dehnungskörpers 5 eine erste Ausnehmung 12 auf, die zu einer höheren Deformierbarkeit des Meßelementes 11 und damit zu einer höheren Empfindlichkeit der auf der Oberfläche 8 angeordneten, hier nicht dargestellten Dehnungsmeßstreifen führt.

Weiter weist das in Fig. 3 dargestellte zweite Ausführungsbeispiel eines erfindungsgemäßen Kraftaufnehmers 2 einen Dehnungskörper 5 auf, der zur Anbringung der in Fig. 3 nicht dargestellten Dehnungsmeßstreifen eine über die sonstigen Konturen hervorstehende, ebene Fläche 8 aufweist. Dadurch, daß die Fläche 8 bei dem dargestellten zweiten Ausführungsbeispiel über die sonstigen äußeren Konturen des Dehnungskörpers 5 hervorsteht, ergibt sich die Möglichkeit der einfachen Anbringung der Dehnungsmeßstreifen auf der Fläche 8 in Dünnschichttechnik.

Bei dem in Fig. 4 dargestellten dritten Ausführungsbeispiel ist die Ausnehmung 12 als Langloch ausgebildet, wodurch eine weitere Steigerung der Empfindlichkeit erreicht wird. Dabei wird der verbleibende Materialquerschnitt reduziert, ohne das die Stabilität in Querrichtung zu stark beeinflußt ist.

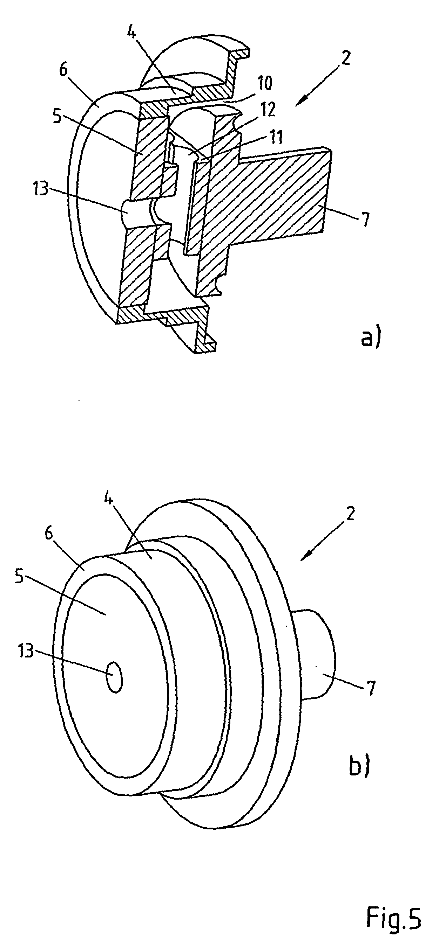

Das in Fig. 5 dargestellte vierte Ausführungsbeispiel weist eine zweite Ausnehmung 13 auf, deren Achse im wesentlichen senkrecht zur Achse der ersten Ausnehmung 12 in Längsrichtung des Dehnungskörpers 5 verläuft und die die erste Ausnehmung 11 innerhalb des Dehnungskörpers durchdringt. Die Anordnung dieser zweiten Ausnehmung 13 ermöglicht die einfache Verlegung von elektrischen Leitungen zum Anschluß der in Fig. 5 nicht dargestellten Dehnungsmeßstreifen.

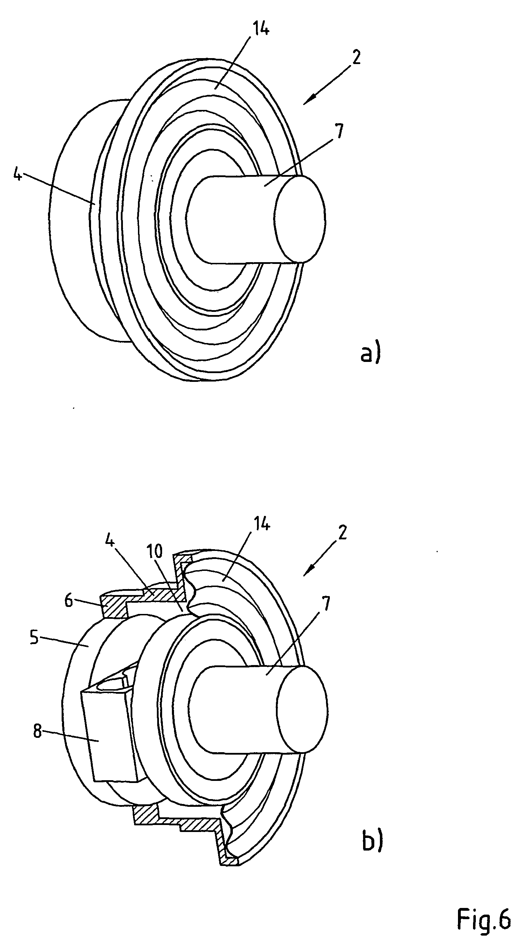

Bei den in Fig. 6 dargestellten fünften Ausführungsbeispiel eines erfindungsgemäßen Kraftaufnehmers 2 ist der in Fig. 6 b) sichtbare Ringspalt 10 durch eine Membran 14 abgedeckt, um das Eindringen von Schmutzpartikeln in den Kraftaufnehmer 2 zu verhindern. Ein besonders wirksamer Schutz des Kraftaufnehmers 2 wird durch die Ausführung der Membran 14 als Metallmembran gewährleistet. Die Metallmembran 14 wird dabei zwischen das Krafteinleitungselement 4 und Kraftabgabeelement 7 eingeschweißt.

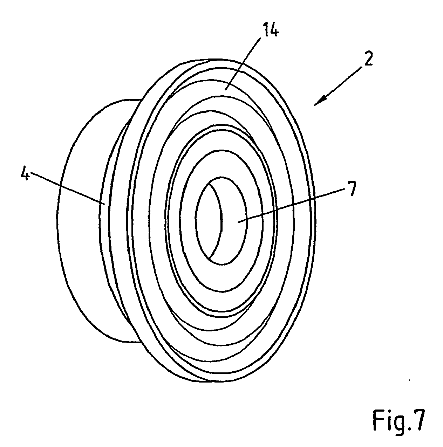

Schließlich weist das in Fig. 7 dargestellte sechste Ausführungsbeispiel eines erfindungsgemäßen Kraftaufnehmers 2 alternativ zu den in den Fig. 2 bis 6 dargestellten Ausführungsbeispielen als Kraftabgabeelement 7 ein Innengewinde statt eines Gewindebolzens auf.

## Patentansprüche

1. Kraftaufnehmer (2) zur Aufnahme der in eine Halterung eines Fahrzeugsitzes (F) eingeleiteten Gewichtskraft mit einem mit dem Fahrzeugsitz (F) verbundenen Krafteinleitungselement (4), einem mit der Halterung verbundenen Kraftabgabeelement (7) und einem zwischen Krafteinleitungselement (4) und Kraftabgabeelement (7) vorgesehenen Dehnungskörper (5),
**dadurch gekennzeichnet, daß** das Krafteinleitungselement (4) oder das Kraftabgabeelement (7) den Dehnungskörper (5) in einer Ebene parallel zur Gewichtskraftwirkung umgibt.

2. Kraftaufnehmer nach Anspruch 1 oder 2,
**dadurch gekennzeichnet, daß** an dem Dehnungskörper (5) mindestens ein eine Scherkraft parallel zur Gewichtskraft aufnehmender Dehnungsmeßstreifen (9) angeordnet ist.

3. Kraftaufnehmer nach Anspruch 2,
**dadurch gekennzeichnet, daß** das Krafteinleitungselement (4) oder das Kraftabgabeelement (7) ein den Dehnungskörper (5) umgebendes Gehäuse bildet, das an einem Ende (6) mit einem Ende des Dehnungskörpers (5) verbunden ist.

4. Kraftaufnehmer nach Anspruch 3,
**dadurch gekennzeichnet, daß** das Gehäuse den Dehnungskörper (5) an wenigstens einer Stelle unter Bildung eines umlaufenden, dünnen Spalts (10) umgibt.

5. Kraftaufnehmer nach einem der Ansprüche 1 bis 4,
**dadurch gekennzeichnet, daß** der umlaufende, dünne Spalt (10) durch eine Membran verschlossen ist.

6. Kraftaufnehmer nach einem der Ansprüche 2 bis 5,
**dadurch gekennzeichnet, daß** zwei Dehnungsmeßstreifen (9) auf einer parallel zur Wirkrichtung der Gewichtskraft verlaufenden Oberfläche (8) des Dehnungskörpers (5) jeweils entgegengesetzt in gleichem Winkel zur Längsachse des Dehnungskörpers (5) angeordnet sind.

7. Kraftaufnehmer nach einem der Ansprüche 2 bis 6,
**dadurch gekennzeichnet, daß** der Dehnungskörper (5) an der Stelle, an der der Dehnungsmeßstreifen (9) angeordnet ist, einen geringen Querschnitt aufweist.

8. Kraftaufnehmer nach Anspruch 7,
**dadurch gekennzeichnet, daß** der Dehnungskörper (5) eine erste Ausnehmung im Bereich der Dehnungsstreifen (9) aufweist und die Achse der ersten Ausnehmung im wesentlichen parallel zur Wirkrichtung der Gewichtskraft verläuft.

9. Kraftaufnehmer nach Anspruch 8,
**dadurch gekennzeichnet, daß** der Dehnungskörper (5) eine zweite Ausnehmung aufweist, die Achse der zweiten Ausnehmung im wesentlichen senkrecht zur Achse der ersten Ausnehmung in Längsrichtung des Dehnungskörpers (5) verläuft und die zweite Ausnehmung innerhalb des Dehnungskörpers (5) die erste Ausnehmung durchdringt.

10. Kraftaufnehmer nach einem der Ansprüche 2 bis 9,
**dadurch gekennzeichnet, daß** der Dehnungskörper (5) zumindest teilweise einen eckigen Querschnitt aufweist.

11. Kraftaufnehmer nach einem der Ansprüche 2 bis 10,
**dadurch gekennzeichnet, daß** der Dehnungskörper (5) zur Anbringung der Dehnungsmeßstreifen (9) eine über die sonstigen Konturen des Dehnungskörpers (5) hervorstehende, ebene Fläche aufweist.

## Claims

1. A force transducer (2) for receiving the weight transferred into a support of a vehicle seat (F) with a force induction element (4) connected to the vehicle seat (F), a force transfer element (7) connected to the support, and an expansion body (5) provided between the force induction element (4) and the force transfer element (7), **characterized in that**
the force induction element (4), or the force transfer element (7) surround the expansion body (5) in a plane parallel to the action of the weight.

2. The force transducer according to claim 1, **characterized in that** on the expansion body (5) at least one strain gage (9) is located, receiving a shear force, parallel to the action of the weight.

3. The force transducer according to claim 2, **characterized in that** the force induction element (4), or the force transfer element (7) form a housing surrounding the expansion body (5), connected with one end (6) to one end of the expansion body (5).

4. The force transducer according to claim 3, **characterized in that** the housing surrounds the expansion body (5) at least in one location, forming a narrow circumferential gap (10).

5. The force transducer according to one of claims 1 to 4, **characterized in that** the circumferential narrow gap (10) is closed by a membrane.

6. The force transducer according to one of claims 2 to 5, **characterized in that** two strain gages (9) are located on a surface (8) of the expansion body (5), extending in parallel to the direction of action of the weight, each facing in an opposite direction, at the same angle relative to the longitudinal axis of the expansion body (5).

7. The force transducer according to one of claims 2 to 6, **characterized in that** the expansion body (5) has a small cross section in the location, where the strain gage (9) is located.

8. The force transducer according to claim 7, **characterized in that** the expansion body (5) has a first recess in the area of the strain gages (9), and the axis of the first recess is substantially parallel to the direction of the action of the weight.

9. The force transducer according to claim 8, **characterized in that** the expansion body (5) has a second recess, the axis of the second recess is substantially perpendicular to the axis of the first recess in the longitudinal direction of the expansion body (5), and the second recess within the expansion body (5) reaches through the first recess.

10. The force transducer according to one of claims 2 to 9, **characterized in that** the expansion body (5) has at least partially an angled cross section.

11. The force transducer according to one of claims 2 to 10, **characterized in that** the expansion body (5) has a flat surface protruding beyond the other contours of the expansion body (5) for mounting the strain gages (9).

## Revendications

1. Transducteur de force (2) pour la réception de la force du poids introduite dans le support du siège d'un véhicule (F) avec un élément d'entrée de force (4) connecté au siège du véhicule (F), un élément de sortie de force (7) connecté au support et un corps d'extension (5) prévu entre l'élément d'entrée de force (4) et l'élément de sortie de force (7), **caractérisé en ce que** l'élément d'entrée de force (4) ou l'élément de sortie de force (7) entoure le corps d'extension (5) dans un plan parallèle par rapport à l'effet de la force du poids.

2. Transducteur de force, selon la revendication 1, **caractérisé en ce que** sur le corps d'extension (5) au moins une bande de mesure d'extension (9) est disposée qui reçoit une force de cisaillement parallèle à la force du poids.

3. Transducteur de force selon la revendication 2, **caractérisé en ce que** l'élément d'entrée de force (4) ou l'élément de sortie de force (7) conforment un boîtier qui entoure le corps d'extension (5) et qui est connecté, dans une extrémité (6) à l'extrémité du corps d'extension (5).

4. Transducteur de force selon la revendication 3, **caractérisé en ce que** le boîtier entoure le corps d'extension (5), du moins dans une position, en formant un fin écartement (10) circonférentielle.

5. Transducteur de force selon l'une quelconque des revendications 1 à 4, **caractérisé en ce que** le fin écartement (10) circonférentielle est scellée par une membrane.

6. Transducteur de force selon l'une quelconque des revendications 2 à 5, **caractérisé en ce que** deux bandes de mesure d'extension (9) sont disposées sur une surface (8) du corps d'extension (5), de façon parallèle à la direction de l'effet de la force du poids, de façon opposée, dans le même angle relative à l'axe longitudinal du corps d'extension (5).

7. Transducteur de force selon l'une quelconque des revendications 2 à 6, **caractérisé en ce que** le corps d'extension (5) présente dans la position dans laquelle est disposée la bande de mesure d'extension (9) une petite section transversale.

8. Transducteur de force selon la revendication 7, **caractérisé en ce que** le corps d'extension (5) présente une première cavité dans la zone de la bande d'extension (9) et l'axe de la première cavité s'étend principalement de façon parallèle à la direction de l'effet de la force du poids.

9. Transducteur de force selon la revendication 8, **caractérisé en ce que** le corps d'extension (5) présente une deuxième cavité, l'axe de la deuxième cavité s'étendant principalement de façon perpendiculaire à l'axe de la première cavité suivant la direction longitudinale du corps d'extension (5) et la deuxième cavité s'introduit à travers la première cavité à l'intérieur du corps d'extension (5).

10. Transducteur de force selon l'une quelconque des revendications 2 à 9, **caractérisé en ce que** le corps d'extension (5) présente, du moins en partie, une section transversale anguleuse.

11. Transducteur de force selon l'une quelconque des revendications 2 à 10, **caractérisé en ce que** le corps d'extension (5) présente une surface plate en saillie par rapport au reste des contours du corps d'extension (5) afin de fixer la bande de mesure d'extension (9).
